# EUROPEAN PATENT APPLICATION

(11) **EP 1 460 702 A1**
(43) Date of publication of application: **22.09.2004**
(21) Application number: 02786197.0
(22) Date of filing: 24.12.2002
(51) Int. Cl.: H01M 8/02, H01M 8/10

(54) **FUEL CELL-USE SEPARATOR**

(30) Priority: 27.12.2001 JP 2001398316; 14.03.2002 JP 2002070383
(71) Applicant: Hitachi Chemical Co., Ltd., Shinjuku-ku, Tokyo 163-0449 (JP)
(72) Inventor: SUZUKI, Takayuki c/o YAMAZAKI WORKS,, Hitachi-shi, Ibaraki 316-0036 (JP); TASHIRO, Noriji c/o YAMAZAKI WORKS,, Hitachi-shi, Ibaraki 316-0036 (JP)
(74) Representative: Senior, Alan Murray
(86) International application number: PCT/JP2002/013453
(87) International publication number: WO 2003/056648

(57) **Abstract**

A separator for fuel cell having a bending strain at break of 0.5% or more, a compressive modulus of 20 GPa or less, or a Shore hardness falling within the range of from 20 to 50, preferably made of a molded body including graphite and a resin, as well as a separator for fuel cell made of a molded body including graphite and a resin, wherein, after soaking the separator at 80°C for 100 hours in water 30 times as much as the molded body by volume, the total concentration of the sodium, potassium, iron, nickel and magnesium released into the soaking water is 20 ppm or less, and the concentration of the sulfur released into the soaking water is 30 ppm or less, can provide a fuel cell which is excellent in the assembly soundness of the fuel cell stack and in which the deterioration of the cell properties hardly occurs even for a long time operation.

## Description

### TECHNICAL FIELD

The present invention relates to a separator for fuel cell, in particular, a separator for fuel cell suitable for a polymer electrolyte fuel cell and relates to a fuel cell using the separator for fuel cell.

### BACKGROUND ART

In these years, fuel cells have greatly attracted attention from the viewpoint of the countermeasures for preventing the warming of the earth caused by expanding consumption of fossil fuel and for saving energy; in particular, for the polymer electrolyte fuel cell, domestic and foreign research institutes and companies have promoted research and development for the purpose of applying the polymer electrolyte fuel cell to stationary electric power generators, fuel cell vehicles and the like.

A polymer electrolyte fuel cell is a cell containing, as a fundamental unit, a single cell in which an electrolyte made of a polymer ion exchange film is sandwiched between catalytic electrodes, around which plate like members called separators are arranged; a fuel such as hydrogen or methanol is supplied to one side of the electrolyte and air or the like as oxidant is supplied to the opposite side of the electrolyte, and the electric energy generated between the electrodes by the electrochemical reaction occurring under the above described conditions is taken out. The electromotive force of a single cell is a few hundreds mV, so that it is necessary to form a stack made by laminating a few hundreds of single cells when the fuel cell is practically applied to an actual device.

A separator, one of the members constituting the fuel cell, is provided with fine passages for supplying the fuel and oxidant quantitatively and stably into the sides.

Additionally, the separator is also required to have conductivity for transferring the generated electric energy to the outside, gas impermeability for preventing the mixing of the fuel and the oxidant, and mechanical strength to preclude damage when a large number of single cells are laminated, compressed and jointed.

Additionally, the number of a block of separators to be used in a fuel cell amounts to a few hundreds, so that the above described properties are still required to be maintained even when the separator thickness is made thin for the purpose of making the whole stack compact, and the reduction of the cost per one separator is also urgently demanded.

However, the conventional separators as described above has been suffered from the problems involving the soundness in stack assembling: they cannot ensure the gas sealability in the portions for sealing the gaps between the separators by packing, which results in leakage of fuel and oxidant; there occurs damage due to the local stress enhanced when the laminated body is compressed; and they suffer from nonuniform contact resistance within the planes of the separators to cause degradation of the cell properties.

Additionally, in a polymer electrolyte fuel cell, the reaction between the fuel and the oxidant produces water. And, for the purpose of maintaining the operation temperature at a constant temperature, cooling water is required to pass though the stack. Moreover, water vapor is also required to be supplied into the stack, if necessary, because the electrolyte displays its capability when it holds a sufficient amount of water.

As described above, water plays an important role in fuel cells, as well as the fuel and oxidant, and the separators are naturally used in a condition being in contact with water. If impurities are released from the separators into the water during the operation, the electrolytes and catalytic electrodes can be polluted to lower the electric power generation efficiency, and the electric conductance of the pure water as cooling water can be increased to cause short circuiting between the cells through the intermediary of the cooling water. Accordingly, a small amount of elution into water is one of the important requirements to the material for the separator.

As for the materials for the separator, research and development have hitherto been conducted for the materials broadly classified into metals, graphite materials and graphite powder/resin molded materials. Among these materials, metals involve the problems such that the increase of the resistance caused by corrosion and the degradation of the cell properties caused by the elution of metal ions, and moreover the use of metals results in a very heavy weight of the stack because metals have high specific gravity.

Separators made of artificial graphite material which have been frequently used in the stage of the research and development so far are made by the manufacturing method in which a graphite plate is cut out from a block of isotropic or anisotropic artificial graphite, and the plate is subjected to drill machining over a long period of time to form passages on the surface of the plate by means of a program controlled processing machine. Artificial graphite is a porous material, so that the step of soaking the machined graphite plate into a resin soaking solution for providing the plate with the gas impermeability is indispensable, and consequently, the unit cost of the separator is extremely high.

In contrast to the separators described above, a graphite powder/resin molded material as disclosed in International Publication No. WO97/02612 is made by means of the thermocompression molding method, injection molding method and the like from a source material composed of a mixture of carbon powder, graphite powder, a thermosetting resin, a thermoplastic resin and the like. As compared to both methods described above, the method using a graphite powder/resin molded material permits drastic reduction of the cost. It is a method that will be able to meet the mass production in the future when fuel cells become widely used.

However, a separator obtained from a graphite powder/resin molded material has a structure in which graphite powder is bonded with the resin, so that water tends to penetrate into the voids between the graphite powder particles and the resin during operation and the surface of the separator tends to be increased. In addition, the separator obtained from a graphite powder/resin molded material is larger in resin content than the artificial graphite material separator. As the result, it tends to be larger in elution components including metal impurities than the artificial graphite material separator. Consequently, compared with a fuel cell which uses the artificial graphite material separators, a fuel cell that uses the molded separators frequently tends to be deteriorated in the cell properties for elongated period of operation time, and hence there has been a problem involving reliability and durability.

### DISCLOSURE OF THE INVENTION

The present invention provides a separator for fuel cell excellent in soundness in assembling fuel cell stack and/or a separator for fuel cell hardly deterioratable in cell properties even for long time operation, and a fuel cell using the separator.

The present invention provides a separator for fuel cell having a bending strain at break of 0.5% or more.

The present invention provides a separator for fuel cell having a compressive modulus of 20 GPa or less.

The present invention further provides a separator for fuel cell having a Shore hardness falling within the range of from 20 to 50.

The present invention further provides a separator for fuel cell made of a molded body comprising graphite and a resin, and for which, after soaking of the separator for 100 hours in 30 times the volume of the molded body of water maintained at 80°C, the total concentration of the sodium, potassium, iron, nickel and magnesium released into the soaking water is 20 ppm or less, and the concentration of the sulfur released into the soaking water is 30 ppm or less.

The present invention also provides fuel cells comprising the above described separators for fuel cell.

### BRIEF DESCRIPTION OF THE DRAWINGS

Figs. 1A and 1B are the plan views showing an example of the shape of the separator for fuel cell according to one embodiment of the present invention;
Fig. 2 is a sectional view along the X-X line in Fig. 1A;
Figs. 3A and 3B are the plan views showing an example of the shape of the separator for fuel cell according to another embodiment of the present invention; and
Fig. 4 is a sectional view along the Y-Y line in Fig. 3A.

### BEST MODE FOR CARRYING OUT THE INVENTION

Preferred embodiments of the separators for fuel cell and fuel cells of the present invention are described as follows.
(1) A separator for fuel cell having a bending strain at break of 0.5% or more.
(2) The separator for fuel cell according to the above description (1) having a compressive modulus of 20 GPa or less.
(3) The separator for fuel cell according to the above description (1) or (2) having a Shore hardness ranging from 20 to 50.
(4) A separator for fuel cell having a compressive modulus of 20 GPa or less.
(5) The separator for fuel cell according to the above description (4) having a Shore hardness ranging from 20 to 50.
(6) A separator for fuel cell having a Shore hardness ranging from 20 to 50.
(7) The separator for fuel cell according to any one of the above descriptions (1) to (6), wherein the separator is a molded body comprising graphite and a resin.
(8) A separator for fuel cell made of a molded body comprising graphite and a resin, wherein, after soaking the separator at 80°C for 100 hours in 30 times the volume of the molded body of water, the total concentration of the sodium, potassium, iron, nickel and magnesium released into the soaking water is 20 ppm or less, and the concentration of the sulfur released into the soaking water is 30 ppm or less.
(9) The separator for fuel cell according to any one of the above descriptions (1) to (8), wherein the separator has a rib portion and a flat portion.
(10) The separator for fuel cell according to the above description (7) or (8), wherein the graphite is expanded graphite.
(11) The separator for fuel cell according to the above description (10), wherein the expanded graphite is a pulverized powder of the expanded graphite sheet.
(12) The separator for fuel cell according to the above description (7) or (8), wherein the resin is a thermosetting resin.
(13) The separator for fuel cell according to the above descriptions (1) to (12), wherein the separator has opening portions other than the rib portion and the flat portion.
(14) A fuel cell comprising a separator for fuel cell according to any one of the above descriptions (1) to (13).
(15) The fuel cell according to the above description (14), wherein the fuel cell is a polymer electrolyte fuel cell.

The separator for fuel cell of the present invention has a bending strain at break of 0.5% or more, preferably 0.6% or more, more preferably in the range of from 0.7% to 1.5%. When the separators are assembled in a stack using a separator having a bending strain at break less than 0.5%, the separators each having a large thickness variation in the separator sheet would cause large local distortions and tend to increase the possibility of resulting in fracture.

When the separators are assembled in a stack, the separators are strongly compressed, so that to prevent the breaking of the separators in this case, the bending strain at break is important rather than the bending strength. Additionally, the above described bending strain at break becomes important for the purpose of improving the adhesivity of the separators and the performance as a fuel cell when a solid polymer film or a carbon paper sheet is sandwiched in each of the separators.

When the bending strain at break of the separator for fuel cell of the present invention is 0.5% or more, no particular limitation is put on the compressive modulus and the Shore hardness thereof, but the compressive modulus is preferably 20 GPa or less, more preferably 15 GPa or less, and more preferably falls within the range of from 0.5 GPa to 10 GPa. The Shore hardness preferably falls within the range of from 20 to 50, more preferably from 20 to 45, and more preferably from 20 to 40.

In the present invention, even if the bending strain at break is less than 0.5%, the object of the present invention can be achieved when the compressive modulus is 20 GPa or less, preferably 15 GPa or less, more preferably falls within the range of from 0.5 GPa to 10 GPa, or alternatively, when the Shore hardness falls within the range of from 20 to 50, preferably from 20 to 45, more preferably from 20 to 40. However, when the above described ranges are not reached, namely, when the compressive modulus exceeds 20 GPa, the deformation in response to loading can hardly occur, and hence in stack assembling, sometimes the gas sealability cannot be ensured between the separators when the separators are large in thickness variation, or the contact with the electrodes or the contact between the adjacent separators is degraded, and thus the contact resistance becomes large and the electric power generation efficiency tends to be lowered.

Additionally, when the Shore hardness is less than 20, the material of the separator becomes too soft, so that if the thickness variation for the separators is large, a very large offset load is exerted to the rib portion, and breaking of the rib can take place. On the contrary, when the Shore hardness is larger than 50, the material of the separator becomes too hard, so that if an offset load is exerted on the separators large in thickness variation, the separators cannot relieve the offset load, and hence the contact resistance involving the electrode or the contact resistance between the adjacent separators becomes large.

On the other hand, as for the separator in the present invention, irrespective as to whether the separator has the above described physical properties or not, it is necessary that after soaking of the molded body comprising graphite and a resin for 100 hours in 30 times the volume of the molded body of water maintained at 80°C, the total concentration of the sodium, potassium, iron, nickel and magnesium released into the soaking water is 20 ppm or less, and the concentration of the sulfur released into the soaking water is 30 ppm or less.

In the present invention, the temperature of the soaking water is set at 80°C for simulating the general operation temperature of a polymer electrolyte fuel cell. The soaking time of 100 hours is adopted as a sufficient time to ensure that the contents of impurities in the soaking solution hit the ceiling, and to consequently permit stable analysis. Here, it should be noted that the deviations within about ±5% of both of the soaking time and the soaking temperature would not affect the measurement results, so that the case of the deviations within ±5% of the soaking time and temperature, found in the actual measurements, is regarded to fall within the conditions substantially encompassed within the scope of the claims.

The volume of the soaking water is required to be sufficient to completely immerse the molded body in the water, but if the volume is too large, the concentrations of the released impurities are lowered to degrade the analysis precision. From such a viewpoint, in the present invention, the volume of the soaking water is set to be 30 times the volume of the molded body to be analyzed. Additionally, in the actual measurement, when the volume of the soaking water is reduced by evaporation of the water while the temperature is maintained by heating, the decrement of the water is compensated by adding water to maintain the water volume to be 30 times the volume of the molded body.

The water volume deviation of the order of ±5% falls within the margin of errors for the impurity concentration analysis. Consequently, the case of the deviations within ±5% of the soaking water volume, found in the actual measurements, is regarded to fall within the conditions substantially encompassed within the scope of the claims.

The water used for soaking serves as the background for the measurements, and hence if the impurity contents in the water are large, accurate measurements are made impossible. However, extremely high purity, namely, the level of ultrapure water is not required. And it is desirable that the total concentration of sodium, potassium, iron, nickel and magnesium in the water is 3 ppm or less.

In the present invention, the total concentration of the metal impurities, i.e., sodium, potassium, iron, nickel and magnesium, released into the soaking water is 20 ppm or less and the concentration of the sulfur released into the soaking water is 30 ppm or less; preferably the total concentration of the metal impurities is 10 ppm or less and the concentration of the sulfur is 25 ppm or less; more preferably the total concentration of the metal impurities is 6 ppm or less and the concentration of the sulfur is 15 ppm or less; most preferably, the respective concentrations are 0 ppm. If the respective concentrations exceed the above described ranges, a fuel cell assembled with the separators would be degraded in performance when operated over a long time.

The analysis of these metal impurities may be carried out by means of analysis methods well known in the art such as the inductively-coupled-plasma emission spectrometric method (ICP analysis) and the atomic absorption spectrometric method, and no particular limitation is put on the analysis method concerned.

The analysis of the sulfur may be carried out in such a way that the sample is burnt and the generated gas is extracted in a collecting liquid and may be subjected to analysis by means of a method well known in the art such as the ion chromatography, and no particular limitation is put on the analysis method concerned.

A low ash graphite is particularly selected to be used for the purpose of meeting the features that after soaking of the molded body (separator) for 100 hours in 30 times the volume of the molded body of soaking water maintained at 80°C, the total concentration of the sodium, potassium, iron, nickel and magnesium released into the soaking water is 20 ppm or less, and the concentration of the sulfur released into the soaking water is 30 ppm or less. The ash content is defined as the residue (generally called the ash content composed of the oxides of impurity metals) obtained by completely burning the carbon content of a graphite sample in the air heated to high temperatures usually ranging from 800 to 1,000°C. It is preferable to use a graphite of 1 wt% or less in ash content, and it is more preferable to use a graphite of 0.3 wt% or less in ash content. For the purpose of attaining the sulfur concentration of 30 ppm or less, it is preferable to use a graphite of 0.5 wt% or less in sulfur content, and it is more preferable to use a graphite of 0.3 wt% or less in sulfur content.

Such a graphite as described above can be obtained, for example, by high temperature treatment of graphite (conducted in a halogen gas atmosphere as the occasion demands).

For example, when a pulverized powder of expanded graphite sheet with a low sulfur content is used, it is recommended that in the production of graphite treated with sulfuric acid in the course of the production of the powder, the time period of the stirring after addition of water is set at 10 minutes or more, preferably 20 minutes or more. The apparatus and the vessel used for the acid treatment are preferably made of enamel or plastic that may release metal impurities minimally.

Also, as the resin used as a source material for the separator, a resin of low metal impurity content is preferable. Additionally, in the course of the production of the separator, the post curing treatment after molding is conducted over a long period of time.

The separator for fuel cell in the present invention is a separator made of a molded body comprising graphite and a resin. No particular limitation is put on the shape of the separator, but it is preferable that the shape has a structure having a rib portion and a flat portion. The rib portion has conductivity or conducting property and forms the passage for the gas in the structure in which the separators are laminated through the intermediary of the electrolyte, fuel electrode and air electrode. The flat portion is located on the peripheral portion of the separator to form a holding portion, and is constructed so as to prevent the gas leakage for the gas passing through the above described passage. The rib portion is constructed so as to prevent the gas leakage for the gas passing though the passage formed by laminating the separators. It is preferable that the flat portion serves as the holding portion for fixing the whole laminated body when the separators are laminated. The formation of the above described flat portion is preferable, since it leads to excellent adhesion with carbon paper (electrode).

Additionally, the separator for fuel cell of the present invention may have openings in addition to the rib portion and the flat portion, and particularly, it is preferable that the separator has the openings within the flat portion. The openings are formed so as to form long holes along the lamination direction when the separators are laminated, in such a way that the holes for passing hydrogen gas, oxygen gas and cooling water are formed. Additionally, the respective holes are formed to be communicatively connected with the hydrogen gas passage, the oxygen gas passage and the cooling water passage formed by the rib portions of the separators. The flat portion may have the holes for passing the bolts for fixing when the separators are laminated.

In the case where the above described openings and the holes for fixing bolts are formed, there would occur a problem such that when the separators are laminated and compressed, the peripheral portions of the openings and the peripheral potions of the holes for fixing bolts tend to be broken or cracked. In this connection, the bending strain at break, compressive modulus, and Shore hardness are important factors. Of these factors, the bending strain at break is particularly important. Thus, control of these factors can serve to prevent the above described problems.

The separator for fuel cell in the present invention, in the above description, can be a separator having no flat portion.

The size of the separator depends on the use of the fuel cell system and the design concept. Generally, however, a side length is of the approximate order of 4 or 6 cm to 30 cm, and the thickness is of the approximate order of 0.2 mm to 6 mm.

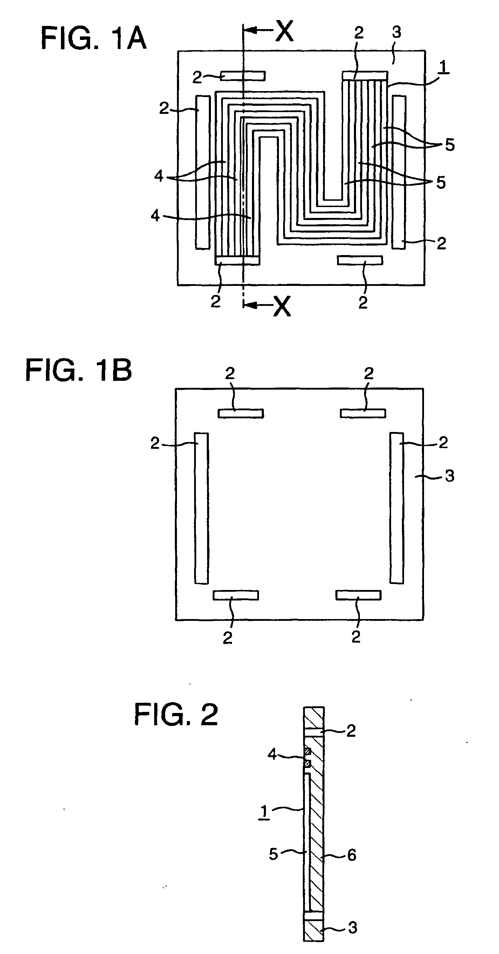

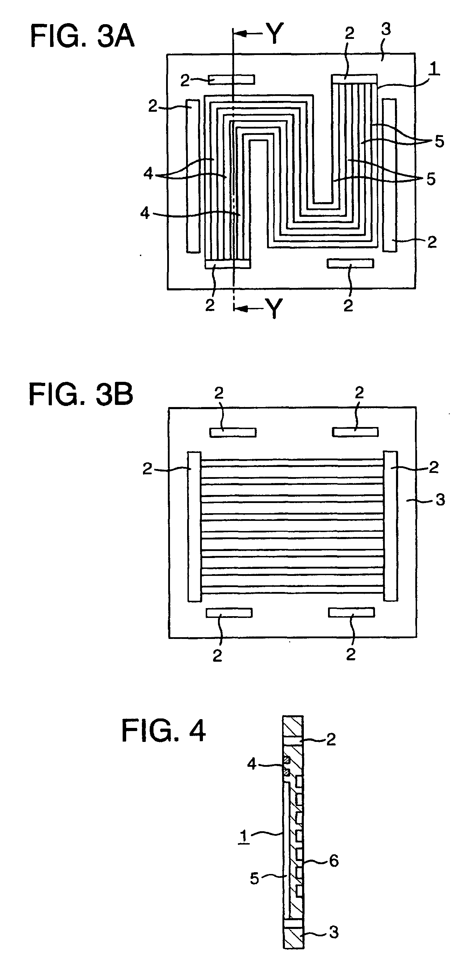

No particular limitation is put on the thickness variation of the separator of the present invention. For the purpose of assembling a sound stack, the thickness variation within a separator is preferably 0.3 mm or less, more preferably 0.2 mm or less, more preferably 0.1 mm or less, and no thickness variation is most preferable. Here it should be noted that the above described thickness means the thickness of the separator, specifically, the length from the bottom (bottom face) 6 to the top level of the flat portion 3 or to the rib portion 1 of the separator for fuel cell shown in Figs. 2 and 4.

The separator for fuel cell in the present invention can be obtained by molding a material comprising graphite and a resin into a separator shape. In particular, a separator having a structure in which graphite is dispersed in resin is preferable because such a separator is excellent in electric properties, moldability and gas impermeability, and inexpensive. No particular limitation is put on the above described graphite, but when the cost is mainly concerned, it is preferable to use, as the above described graphite, natural graphite, artificial graphite and the like. No particular limitation is put on the manufacture of the molded body, but it is preferable to perform molding by means of a method well known in the art such as the compression molding method, the injection molding method and the like. No particular limitation is put on the particle size of the graphite to be used, and it is preferable to use a graphite prepared by mixing graphite particles of different particle sizes in consideration of the required properties and moldability.

Additionally, when the weight reduction, mechanical strength (toughness) and thickness accuracy are mainly concerned, it is preferable to use expanded graphite, particularly, pulverized powder of expanded graphite sheet.

Here, it should be noted that expanded graphite means a graphite prepared by the method in which a source graphite is soaked in a solution containing an acidic substance and an oxidant to prepare a graphite intercalation compound, and the compound thus obtained is subjected to heat treatment to expand the compound along the C axis of the graphite crystal.

The pulverized powder of expanded graphite sheet preferably used in the present invention is a powder (to be described later) prepared by the method in which an expanded graphite powder is compressed into sheets by means of a method including pressing, rolling and the like, and the sheets thus obtained are pulverized; the powder is subjected to classification as the occasion demands. The reason for the pulverization after sheet formation is such that the bulk density of expanded graphite before sheet formation is as very low as 0.05 g/cm³, so that the pulverization with a pulverizer is difficult.

The above described rib portion and the above described flat portion each have a layer comprising expanded graphite and a resin, and it is preferable that the layer is a continuous layer. Such a continuous layer leads to a satisfactory moldability at the time of molding for obtaining a separator, imparts the lightness in weight to the separator, and additionally, imparts preferable properties including high toughness and low elasticity.

The expanded graphite to be used in present invention can be prepared by the step of soaking a source graphite in a solution containing an acidic substance and an oxidant to produce a graphite intercalation compound, and the step of heating the above described graphite intercalation compound to be expanded along the C axis of the graphite crystal to prepare the expanded graphite. In this way, the expanded graphite takes a form in which the expanded graphite exhibits worm like shapes and such shapes of graphite are intertangled with each other in a complicated manner.

It is preferable that the expansion magnification of the expanded graphite is high for securing the strength and sealability of the separator, and no particular limitation is put on the expansion magnification of the expanded graphite, but the expansion magnification is preferably 150 or more, more preferably 150 to 300.

Pulverization of the expanded graphite can yield an expanded graphite powder; in this connection, it is preferable that before pulverization, the obtained expanded graphite is pressurized and compression molded into a sheet to yield expanded graphite sheets.

No particular limitation is put on the above described source graphite, but preferable examples of the source graphite include graphites of highly developed crystallinity such as natural graphite, Kish graphite and pyrolytic graphite. Natural graphite is preferable in consideration of the balance between the obtained properties and the economical efficiency. No particular limitation is put on the graphite to be used, commercially available graphites such as F48C (brand name, manufactured by Nippon Graphite, Ltd.) and H-50 (brand name, manufactured by Chuetu Graphite Co.) can be used. It is preferable to use these graphites in a form of flake like powder.

As the acidic substance used in the treatment of the source graphite, a substance which can generate an acid group (anion) that penetrates between the layers of graphite and exhibits sufficient expansion ability, such as sulfuric acid, is used. No particular limitation is put on the used amount of the acidic substance, and the used amount of the acidic substance is determined by the targeted expansion magnification; for example, the acidic substance is preferably used in an amount of 100 parts by weight to 1,000 parts by weight based on 100 parts by weight of graphite.

As the oxidant concurrently used with the acidic substance, there can be used peroxides such as hydrogen peroxide, potassium perchlorate, potassium permanganate and potassium bichromate, and acids capable of oxidation such as nitric acid. Hydrogen peroxide is particularly preferable from the viewpoint that hydrogen peroxide permits easy production of desirable expanded graphite. When hydrogen peroxide is used as the oxidant, it is preferable to use hydrogen peroxide as an aqueous solution. In this case, no particular limitation is put on the concentration of hydrogen peroxide, but the concentrations of 20 wt% to 40 wt% are preferable. No limitation is put on the used amount of the aqueous solution, it is preferable that 5 parts by weight to 60 parts by weight of the aqueous hydrogen peroxide solution is blended in 100 parts by weight of graphite.

It is preferable that the acidic substance and the oxidant are used in forms of aqueous solution.

Sulfuric acid as the acidic substance is used in an appropriate concentration. The concentration is preferably 95 wt% or more, and the use of concentrated sulfuric acid is particularly preferable.

In the above described step for preparing the intercalation compound of expanded graphite, sulfuric acid is generally used as the acidic substance, and hence the sulfate group tends to remain in a graphite powder made of expanded graphite, so that the graphite powder made of expanded graphite contains sulfur in an larger amount than other general artificial graphites. Consequently, for the purpose of reducing the sulfur content and the conductivity, it is preferable to conduct a treatment for reducing the sulfate group amount. As a treatment method for reducing the sulfate group content, a heat treatment at 300°C or above is preferable.

As for the atmosphere for the heat treatment, it is preferable that the heat treatment is carried out in the air or in an inert gas atmosphere such as nitrogen atmosphere. In this connection, when the heat treatment is conducted in the air, a high heat treatment temperature causes oxidation of the graphite, so that it is preferable to conduct the heat treatment at a temperature of from 300°C to 500°C. On the other hand, when the heat treatment is conducted in an inert gas atmosphere, no particular limitation is put on the upper limit temperature.

The stage conducting the heat treatment may be any of the stage immediately after the expansion, the stage immediately after completion of sheet formation, and the stage immediately after pulverization; and no particular limitation is put on the stage.

In the above description, no particular limitation is put on the method for preparing the expanded graphite sheet, but it is preferable that the expanded graphite obtained as described above is pressurized by means of pressing, rolling or the like to convert it into sheets. No particular limitation is put on the sheet thickness and the bulk density for the expanded graphite in the form of sheet, but it is preferable that the thickness falls within the range of from 0.5 mm to 1.5 mm and the bulk density falls within the range of from 0.2 g/cm³ to 1.7 g/cm³. With the thickness less than 0.5 mm, the obtained molded body tends to be brittle, while with the thickness exceeding 1.5 mm, the moldability tends to be degraded. The use of expanded graphite with the bulk density less than 0.2 g/cm³ tends to degrade the electric resistance of the resulting separators; whereas the use of expanded graphite with the bulk density exceeding 1.7 g/cm³ tends to cause cohesion failure in the resulting separators; and the use of such expanded graphite after pulverization tends to lower the mechanical strength of the resulting separators. Incidentally, the magnitude of the density can be adjusted by regulating the pressurization magnitude, the rolling gaps and the like.

Additionally, it is preferable that the pulverization of the expanded graphite sheet is conducted by means of coarse pulverization and fine pulverization, and thereafter classification is carried out as the occasion demands.

In the present invention, no particular limitation is put on the bulk density of the expanded graphite as source material, but the bulk density of the expanded graphite falls preferably within the range of from 0.05 g/cm³ to 1 g/cm³, more preferably from 0.1 g/cm³ to 0.06 g/cm³, and more preferably from 0.1 g/cm³ to 0.4 g/cm³. When the density of the expanded graphite is too small, the mixability with resin is lowered, while the density of the expanded graphite is too large, the effect for improving the mechanical strength and conductivity of the resulting separator for fuel cell tends to be degraded. The bulk density can be calculated, for example, by placing a prescribed amount of pulverized powder of the expanded graphite in a measuring cylinder, compacting the powder by vibration, and measuring the volume of the powder.

No particular limitation is put on the average particle size of the pulverized powder of expanded graphite sheet. In consideration of the mixability with resin and the moldability with resin, the average particle size falls preferably within the range of from 25 µm to 500 µm, more preferably from 50 µm to 400 µm, and more preferably from 70 µm to 300 µm in terms of the number average particle size. When the particle size is less than 25 µm, the intertangling effect of the expanded graphite powder is decreased, and hence the strength lowering of the separator tends to occur, while when the particle size exceeds 500 µm, the flowing of the expanded graphite into the narrow ribs is degraded, so that it tends to be difficult to mold a separator having a thin flat portion and a high rib portion height. The average particle size can be measured by means of various particle size distribution measurement apparatuses including, for example, SALD-3000J manufactured by Shimadzu Corp.

In the present invention, no particular limitation is put on the nature of the resin to be used. In consideration of the safety, reduction of the manufacturing steps (cost reduction), it is preferable to use a thermosetting resin, a highly heat resistant resin or a thermoplastic resin, all permitting dry mixing (mixing without solvent) and being stable in particle size distribution. Preferably, the resins are in the form of powder, particles or the like.

Additionally, no particular limitation is put on the chemical structure, molecular weight and type of the resin to be used. Examples of the resins to be used include thermosetting resins such as epoxy resin (in combination with a curing agent), melamine resin, curing acrylic resin, and resole type and novolac type powdery phenolic resins; and highly heat resistant resins or thermoplastic resins such as powdery polyamide resin, powdery polyamideimide resin, phenoxy resin, arylic resin and the like. A thermosetting resin is combined with a curing agent, a curing accelerator and the like, if necessary. Preferably, curing agents and curing accelerators for use are in the form of powder, particle or the like.

Of these resins, in view of the excellent economical efficiency, workability and balance between the properties after curing, it is preferable to use phenolic resin, a thermosetting resin.

When a powdery phenolic resin is used, no particular limitation is put on the particle size distribution of the resin, but in consideration of the dry-mixability, the number average particle size falls preferably within the range of from 1 µm to 1,000 µm, and more preferably within the range of from 5 µm to 50 µm. When the number average particle size is less than 1 µm, the use of the powdery phenolic resin would raise a problem of resin coagulation and the uniform mixing of the resin with the pulverized powder of expanded graphite sheet tends hardly to be expected, while when the number average particle size exceeds 1,000 µm, the uniform mixing becomes difficult similarly to the above description, and the density of the obtained molded body tends to be partially varied.

As the phenolic resin, preferable are phenolic resins that are uniform in particle size as a powder property, low in the extent of blocking (powder coagulation), small in the gas generated in the reaction so as to facilitate the molding, and short in the time for completion of heat treatment. Of such phenolic resins, preferably used is a phenolic resin comprising the dihydrobenzoxazine ring polymerizable by the ring-opening polymerization (the phenolic resin comprising the chemical structural units represented by the general formulas (A) and (B)): 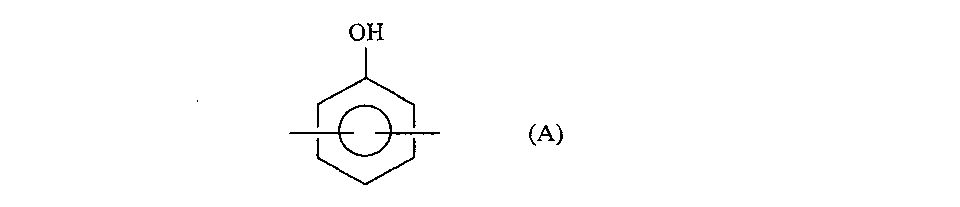 where each of the hydrogen atoms bonded to the aromatic ring, except for the one hydrogen atom in the ortho position relative to the hydroxy group, can be replaced with a hydrocarbon group such as a C₁₋₃ alkyl group, a cyclohexyl group, a phenyl group, or a phenyl group substituted with a C₁₋₃ alkyl group or a C₁₋₃ alkoxy group, and 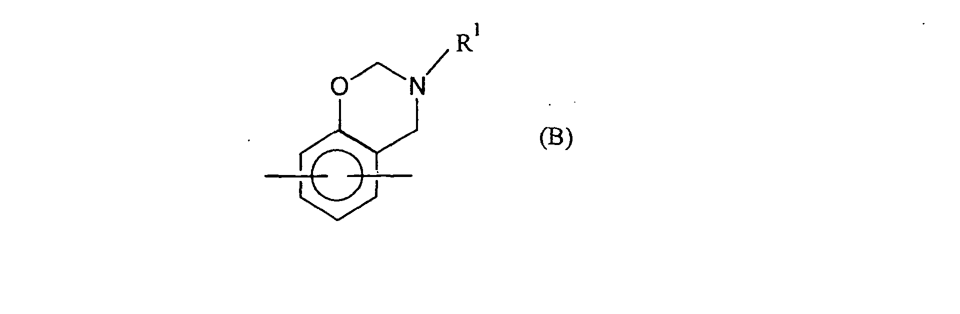 where R¹ represents a hydrocarbon group such as a C₁₋₃ alkyl group, a cyclohexyl group, a phenyl group, or a phenyl group substituted with a C₁₋₃ alkyl group or a C₁₋₃ alkoxy group, and the hydrogen atoms bonded to the aromatic ring can be replaced with the hydrocarbon groups similar to those in the above formula (A).

When a powdery phenolic resin is used as the resin, no particular limitation is put on the particle size distribution thereof. In consideration of the mixability ensuring the short time mixing in a dry method with the pulverized powder of expanded graphite sheet and the flow property of the resin at the time of molding, the number average particle size falls preferably within the range of from 1 µm to 100 µm, more preferably within the range of from 5 µm to 50 µm.

The mixing ratio between the expanded graphite and the resin both to be used in the present invention is determined by the consideration of the values of the various properties of the separator for fuel cell that is the targeted final molded body. Usually, the mixing ratio of expanded graphite/resin falls preferably within the range of from 95/5 to 40/60 (by weight), more preferably within the range of from 95/5 to 30/70 (by weight), more preferably within the range of from 90/10 to 50/50 (by weight), and most preferably within the range of from 85/15 to 60/40 (by weight). When the mixing ratio of the expanded graphite to the resin exceeds 95/5, the mechanical strength tends to sharply decrease, while when the mixing ratio of the expanded graphite to the resin is less than 40/60, the addition amount of the expanded graphite, a conductive material, is small and hence the electric properties tend to be degraded.

No particular limitation is put on the method for mixing the expanded graphite and the resin. For the purpose of preventing the fine pulverization of the expanded graphite, it is preferable that the mixing method is based on the dry mixing method using a shaker, a V blender or the like which does not exert a large shear force to the expanded graphite at the time of mixing. If the expanded graphite is finely pulverized at the time of mixing, the mechanical strength of the obtained separator for fuel cell tends to be sharply degraded.

Additionally, at the time of molding into the separator for fuel cell, the above described mixed powder can be directly used for molding as the molding additives powder. For the purpose of improving the mixability and the workability at the time of molding, it is preferable that sheet like material (hereinafter referred to as "sheet for molding") prepared by compression molding the mixed powder is used for molding.

No particular limitation is put on the method for preparing the sheet for molding. For example, there can be used an apparatus for preparing sheet for molding constituted with a mixture charging tank, a gate regulator for making the material to have a predetermined thickness, a slitter for finishing the material into a predetermined width, a transfer device for transferring the above described material to be processed, pressure rolls for forming sheet and the like. When the flat portion has the openings, it is preferable that the openings are formed on the sheet for molding.

The sheet for molding can be used for the separator production, after the resin contained in the sheet for molding has been subjected to the partial progress of the curing reaction, or subjected to the partial (not complete) hot melting in order to improve the strength thereof. No particular limitation is put on the method for the curing reaction or the hot melting. Examples of the method include a method of heating the obtained sheet for molding, more specifically, a method in which the above described pressure rolls are equipped with a heating device and the heating is made by passing the sheet through the pressure rolls, and a method in which the obtained sheet for molding is made to pass thorough a hot oven.

No particular limitation is put on the molding method for obtaining the above described molded body (separator for fuel cell). The compression molding method is preferable in consideration of the cost for the molding machine, the optimal orientation of the expanded graphite powder in the resin that determines the thickness accuracy, electric properties and mechanical properties of the obtained molded body, and the like.

If, in performing the molding, the amount of the charged source material per unit area for the rib portion is in the same level of that for the flat portion, the bulk density of the flat portion becomes lower. Consequently, in order to allow the purpose of the bulk density of the rib portion and that of the flat portion to fall at the same time within the above described range, it is necessary to change the amount of the charged source material for each portion. For example, as the occasion demands, an additional sheet for molding fitted in shape to the flat portion may be provided, or a reinforcing sheet such as a glass cloth sheet, which may also serve as a sheet for improving the strength, may be used in such a manner that the additional and/or reinforcing sheet is superposed on the sheet for molding.

No particular limitation is put on the bulk density of the obtained separator for fuel cell. For example, the bulk density of the flat portion is preferably 1.35 g/cm³ or more, and falls more preferably within the range of from 1.40 g/cm³ to 1.75 g/cm³. Additionally, the bulk density of the rib portion is preferably 1.35 g/cm³ or more, and falls more preferably within the range of from 1.45 g/cm³ to 1.75 g/cm³. The above described bulk densities are preferable because these bulk densities can ensure the airtightness and provide excellent thickness accuracy.

In the present invention, 0.5% or more of bending strain at break, 20 GPa or less of compressive modulus or from 20 to 50 of Shore hardness of the separator for fuel cell can be achieved by finding the optimal conditions with the aid of the adjustment of the particle size of the molding materials such as the pulverized powder from expanded graphite sheet to be used as the source material and the resin blending ratio that matches the above particle size, the charging amount of the mixture of the molding materials and the resin to be charged into the mold, the molding pressure and the like.

A fuel cell has a structure in which a required number of cells, made of the electrolyte layer composed of a solid polymer electrolyte and the like in such a way that the electrolyte layer is sandwiched, are laminated with the aid of the separators of the present invention. The separator of the present invention can be used as the separator for such fuel cells as an alkaline, a polymer electrolyte, a phosphoric acid type, a fused carbonate type, a solid acid type fuel cell and the like, these fuel cells being classified according to the electrolytes involved. In particular, it is preferable to use the separator of the present invention in a polymer electrolyte fuel cell.

The adoption of the structure as described above makes it possible to obtain a separator for fuel cell and a fuel cell excellent in the assembly soundness, and having satisfactory thickness accuracy, gas impermeability, electric properties, mechanical strength and the like.

Description will be made below on the modes of the examples of the present invention with reference to the accompanying drawings.

Figs. 1A and 1B are plan views showing an example of the shape of a separator for fuel cell of one embodiment of the present invention; Fig. 2 is a view of the X-X section in Fig. 1A; Figs. 3A and 3B are plan views showing an example of the shape of a separator for fuel cell of another embodiment of the present invention; and Fig. 4 is a view of the line Y-Y section in Fig. 3A. In these figures, reference numeral 1 denotes a rib portion having a rib (groove) for ensuring the passage for supplying gas and cooling water, 2 denotes an opening for supplying gas and cooling water, 3 denotes a flat portion, 4 denotes a protrusion, 5 denotes a groove and 6 denotes a bottom (bottom face).

The present invention is described below with reference to the examples.

### Example 1

### (1) Production of Mixed Powder for Molding

Expanded graphite sheet of 1.0 mm in thickness and 1.0 g/cm³ in bulk density (brand name: Carbofit HGP-105, manufactured by Hitachi Chemical Co., Ltd.) was pulverized with the aid of a coarse pulverizer and a fine pulverizer. The coarse powder was removed by passing the powder through a sieve of 425 µm in aperture, to obtain a pulverized powder of expanded graphite sheet of 0.6 wt% in ash content, 0.12% in sulfur content, and 250 µm in average particle size. The pulverized powder of expanded graphite sheet and a powdery phenolic resin (brand name: HR1060, manufactured by Hitachi Chemical Co., Ltd.) of 20 µm in number average particle size having the chemical structure units represented by the above described general formulas (A) and (B) were blended in the ratio by weight of the pulverized powder of expanded graphite sheet to the powdery phenolic resin of 70:30, and were mixed together by dry mixing with the aid of a V blender to yield a mixed powder.

### (2) Production of a Separator for Fuel Cell

Then, molds were used for the purpose of obtaining the separators for fuel cell shown in Figs. 1A, 1B, 2, 3A, 3B and 4. Of these, the lower mold plate (the part becoming Fig. 1B (back side) after molding) for obtaining the separator shown in Figs. 1A, 1B and 2 was made to have a flat molding surface (200 mm long, 200 mm wide), while the upper mold plate (the part becoming Fig. 1A (front side) after molding) was made to be a mold having protrusions. More specifically, the upper mold plate was made to have such a shape that after molding, the rib height was 0.6 mm, the rib pitch was 2 mm, the rib width was 2 mm and the rib taper was 10 degrees. Additionally, the area in which the ribs 1 were formed was the central 150 mm × 150 mm portion.

On the other hand, the lower mold plate (the part becoming Fig. 3B (back side) after molding) and the upper mold plate (the part becoming Fig. 3A (front side) after molding) for obtaining the separator shown in Figs. 3A, 3B and 4 were both made to be molds having protrusions. Among these, the lower mold plate was made to have such a shape that after molding, the rib height was 0.6 mm, the rib pitch was 6 mm, the rib width was 6 mm and the rib taper was 10 degrees. Additionally, the upper mold plate was made to have the same shape as the upper mold plate for obtaining the separator of which the shape is shown in Figs. 1A, 1B and 2.

The mixed powder obtained in (1) was molded into a sheet by use of a sheet forming machine equipped with press rolls, to obtain a sheet for molding having a weight per unit area of 0.23 g/cm², and a size of 200 mm × 200 mm and a thickness of 5 mm.

Additionally, by using a sheet forming machine similar to that described above, a sheet for molding having a weight per unit area of 0.09 g/cm², and a size of 200 mm × 200 mm and a thickness of 5 mm was produced, and a 150 mm × 150 mm area was cut out from the central portion.

Thereafter, the lower mold plate for obtaining the separator shown in Figs. 1A, 1B and 2 was heated to 180°C, a piece of the sheet for molding obtained in the above description was placed on the lower mold plate, and thereafter a piece of the sheet for molding with a cut out central portion was further superposed thereon. Thereafter, on the top thereof, the upper mold plate was placed with the portion having the protrusions facing downward, and the molding was carried out for 10 minutes under the conditions such that the obtained molded body had a thickness of 1.9 mm, more specifically, at 180°C and at a contact pressure of 19.6 MPa (2 × 10⁶ kg/m²), and then the openings 2 were punched at 6 positions in the flat portion 3 with a simple punching machine to obtain 52 sheets of separators for fuel cell (a) having the shape shown in Figs. 1A, 1B and 2. Incidentally, in Figs. 1A, 1B and 2, reference numeral 4 denotes a protrusion, 5 denotes a groove and 6 denotes a bottom (bottom face).

On the other hand, 52 sheets of the separators for fuel cell (b), of which the shape is shown in Figs. 3A, 3B and 4, are also obtained through the steps similar to those described above. The thickness of the separator for fuel cell (b) was 2.0 mm.

Additionally, the bulk densities of the rib portion and the flat portion of the obtained separator for fuel cell (a) were 1.44 g/cm³ and 1.68 g/cm³, respectively; and the bulk densities of the rib portion and the flat portion of the obtained separator for fuel cell (b) were 1.58 g/cm³ and 1.60 g/cm³, respectively. Incidentally, in the following examples and comparative examples, the thickness values and the bulk densities of the rib and flat portions of the separators for fuel cell (a) and (b) are the same as those described above.

### Example 2

The pulverized powder of expanded graphite sheet obtained in (1) of Example 1 was further made to pass through a sieve of 180 µm in aperture, the coarse powder was thereby removed, and a pulverized powder of expanded graphite sheet of 130 µm in average particle size was obtained. Through the steps similar to those in Example 1, 52 sheets were obtained for each of the separator for fuel cell (a) and the separator for fuel cell (b).

### Example 3

The pulverized powder of expanded graphite sheet obtained in (1) of Example 1 was further made to pass through a sieve of 106 µm in aperture, the coarse powder was thereby removed, and a pulverized powder of expanded graphite sheet of 83 µm in average particle size was obtained. Through the steps similar to those in Example 1, 52 sheets were obtained for each of the separator for fuel cell (a) and the separator for fuel cell (b).

### Example 4

Through the steps similar to those in Example 1, 52 sheets were obtained for each of the separator for fuel cell (a) and the separator for fuel cell (b), except that the pulverized powder of expanded graphite sheet of 250 µm in average particle size obtained in (1) of Example 1 and the powdery phenolic resin used in (1) of Example 1 of 20 µm in number average particle size were blended in a ratio by weight of the pulverized powder of expanded graphite sheet to the powdery phenolic resin of 75:25, and subjected to dry mixing with the aid of a V blender to yield a mixed powder.

### Comparative Example 1

Through the steps similar to those in Example 1, 52 sheets were obtained for each of the separator for fuel cell (a) and the separator for fuel cell (b), except that the pulverized powder of expanded graphite sheet of 130 µm in average particle size obtained in Example 2 and the powdery phenolic resin used in (1) of Example 1 of 20 µm in number average particle size were blended in a ratio by weight of the pulverized powder of expanded graphite sheet to the powdery phenolic resin of 65:35, and subjected to dry mixing with the aid of a V blender to yield a mixed powder.

### Comparative Example 2

Through the steps similar to those in Example 1, 52 sheets were obtained for each of the separator for fuel cell (a) and the separator for fuel cell (b), except that the pulverized powder of expanded graphite sheet of 83 µm in average particle size obtained in Example 3 and the powdery phenolic resin used in (1) of Example 1 of 20 µm in number average particle size were blended in a ratio by weight of the pulverized powder of expanded graphite sheet to the powdery phenolic resin of 65:35, and subjected to dry mixing with the aid of a V blender to yield a mixed powder.

Then, for each of the total sheets of the separator for fuel cell (a) and the separator for fuel cell (b) of each of the above described Examples and Comparative Examples, the thickness was measured at 16 points in total with lengthwise arranged 4 points by widthwise arranged 4 points, by means of a micrometer; thus, the thickness variation (the difference between the maximum thickness and the minimum thickness) in one sheet was determined. The average values of the variations, maximum values and minimum values of these 100 sheets of the separators are shown in Table 1.

Additionally, 2 sheets of each of the separators for fuel cell (a) and the separators for fuel cell (b) obtained in the above'described Examples 1 to 4 and Comparative Examples 1 and 2 were used, and from the flat portion of each separator, 5 sheets of 50 mm × 10 mm specimens and 2 sheets of 20 mm × 20 mm specimens were prepared and the properties shown below were obtained.

By using the 50 mm × 10 mm specimens of the above described specimens, with the aid of an autograph (S-500 manufactured by Shimadzu Corp.), a 3 point bending test with the supporting point separation of 40 mm was conducted. And the fracture distortion was calculated by subtracting the distortion magnitudes of the jigs and apparatus from the deformation magnitude. Incidentally, as reference values, bending strengths were also determined. Additionally, the Shore hardness values on the above described specimens were determined by using a D type Shore hardness meter (manufactured by Nakai Seiki Seisakusho Co., Ltd.).

Then, by use of the above described autograph, a compression test was conducted on the 20 mm x 20 mm specimens, and thus the deformation magnitudes in relation to the load were determined. By subtracting the distortion magnitudes of the jigs and apparatus from the deformation magnitudes, the compressive modulus values were calculated. These properties are collected and shown in Table 1.

Additionally, by using the separators for fuel cell (a) and the separators for fuel cell (b) obtained in the above described Examples 1 to 4 and Comparative Examples 1 and 2, fuel cells were assembled and the cell properties were checked.

At the beginning, a carbon powder supporting a platinum catalyst and a perfluorosulfonic acid powder were dispersed in ethanol to prepare a paste, and the paste was uniformly applied on carbon paper to form an electrode catalyst layer. Two sheets of the paste coated carbon paper were cut into 150 mm squares and the 2 sheets sandwiched a 50 µm thick perfluorosulfonic acid film (brand name Nafion manufactured by Du Pont Corp.) in such a way that the paste coated surfaces faced the inside, and these sheets and film were compression bonded to each other while being heated to prepare a membrane electrode complex (MEK).

Then, using 50 sheets of each of the separators for fuel cell (a) of which the shapes are shown in Figs. 1A, 1B and 2 and the separators for fuel cell (b) of which the shapes are shown in Figs. 3A, 3B and 4, obtained in the respective Examples and the respective Comparative Examples, the above described MEK was sandwiched between a surface (front surface) of the separator for fuel cell (a) shown in Fig. 1A and a surface (front surface) of the separator for fuel cell (b) shown in Fig. 3A, and the rib portions 1 and the peripheries of the openings 2 of both separators were sealed with a liquid packing (silicone rubber) to prepare 50 sets of single cells.

Then, the obtained 50 sets of single cells were laminated while sealing the rib portions 1 and the peripheries of the openings 2 of the surface (back side), i.e., the outer side, of the separator for fuel cell (a) shown in Fig. 1B and the surface (back side) of the adjacent separator for fuel cell (b) shown in Fig. 3B with a liquid packing (silicone rubber); then, the upper side and the bottom side of the laminate were sandwiched with rigid plates, and fixed by applying a contact pressure of 500 KPa, to obtain a stack for use in checking the cell properties.

The stack thus obtained for use in checking the cell properties was supplied with hydrogen gas, air and cooling water through the openings (manifold) 2, maintained at 80°C, operated at a current density of 0.4 mA/cm² for 100 hours, and the output voltage of each of the single cells was measured. The maximum voltage and the minimum voltage of the 50 cells, after the elapsed time of 100 hours, are shown in Table 1. Incidentally, no voltage measurement was made for Comparative Examples 1 and 2 that were broken in the course of the stack assembling.

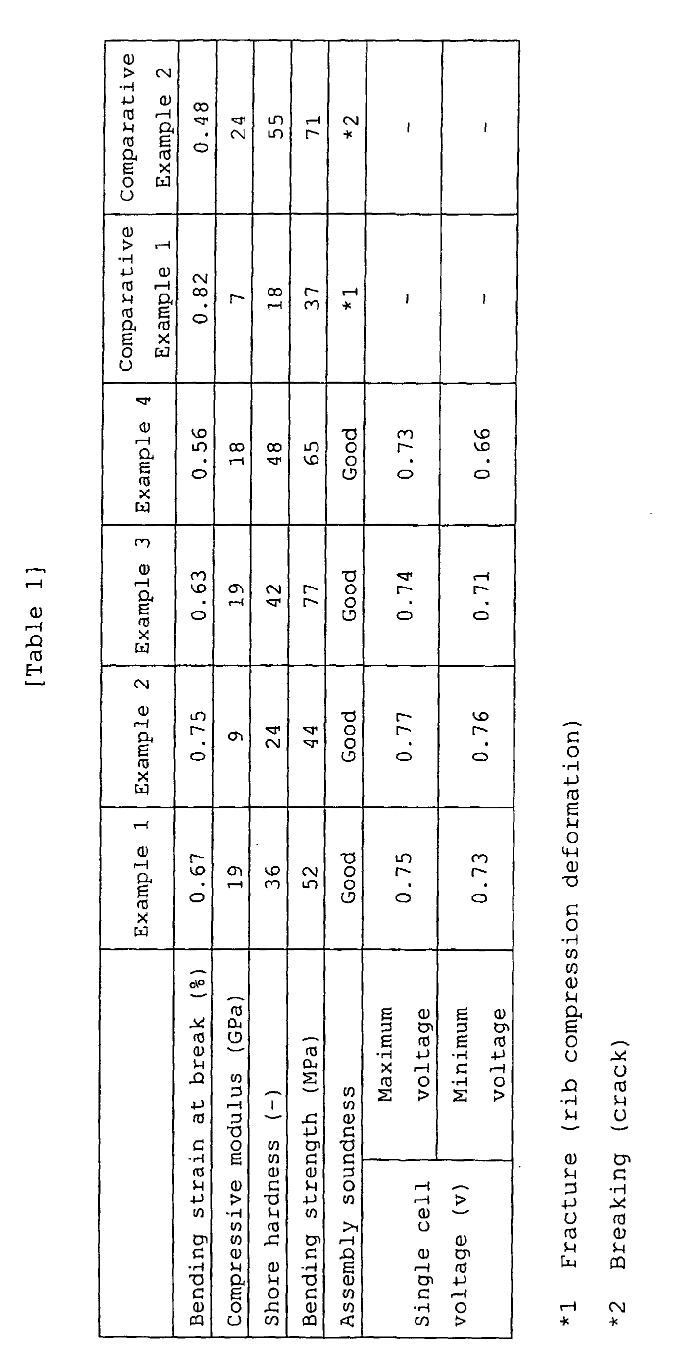

As shown in Table 1, it is apparent that the separators of Examples 1 to 4 of the present invention are small in thickness variation, free from problems in bending strain at break, compressive modulus, Shore hardness and bending strength, can stably supply high output even for the operation for 100 hours, and free from any problem in the assembly soundness for the cell stack. In contrasct, although the separators of Comparative Examples 1 and 2 are small in thickness variation, which is in no way inferior to the thickness variations of the separators of Examples 1 to 3, the separator of Comparative Example 1 is disadvantageous in having a low Shore hardness and bending strength, and the separator of Comparative Example 2 is disadvantageous in having a high compressive modulus, high Shore hardness and low bending strain at break.

### Example 5

### (3) Production of the Pulverized Powder of Expanded Graphite Sheet

Concentrated sulfuric acid (15 liters, concentration: 98 wt%) was put into a glass flask having a volume of 40 liters. 3 kg of natural graphite (the product from China, the fixed carbon content of 99% or more, the particle size of 50 meshes or less) was placed in the flask, and stirring was made for 5 minutes with a stirring motor (number of revolution: 150 min⁻¹) equipped with glass blades. Thereafter, 0.75 liter of hydrogen peroxide (concentration: 35 wt%) was added to the flask, stirring was made for 15 minutes, and then the solid content was separated by filtration under reduced pressure. The solid content was transferred into another vessel, 10 liters of water was added, stirring was made for 30 minutes, then the filtration under reduced pressure was carried out again to separate water, to obtain acid treated graphite.

The obtained acid treated graphite was transferred into an enameled vat and was leveled off. The water content was removed by a heat treatment for 1 hour in a dehydrator with an elevated temperature of 110°C. The resulting graphite was placed in a heating furnace with an elevated temperature of 800°C for 5 minutes to yield expanded graphite. After cooling, the expanded graphite was subjected to rolling with the aid of rolls to be processed into a sheet of 1.0 g/cm³ in density and 1.0 mm in thickness. The obtained sheet was pulverized with a coarse pulverizer (Rotoplex (brand name), manufactured by Hosokawa Micron Corp.), then pulverized with a fine pulverizer (Jiyu Mill M-3 (brand name), manufactured by Nara Machinery Co., Ltd.), to obtain a pulverized powder of expanded graphite sheet of 0.6 wt% in ash content, 0.11 wt% in sulfur content, 250 µm in number average particle size, and 0.25 g/cm³ in bulk density.

### (4) Production of the Mixed Powder for Molding

The pulverized powder of expanded graphite sheet obtained in (3) and a powdery phenolic resin (brand name: HR1060, number average particle size: 20 µm, manufactured by Hitachi Chemical Co., Ltd.) were blended in a ratio by weight of the pulverized powder of expanded graphite sheet to the powdery phenolic resin of 70:30, and were mixed together by dry mixing with the aid of a V blender to yield a mixed powder.

The obtained mixed powder was molded into a sheet by use of a sheet forming machine equipped with press rolls, and 11 sheets for molding, which are to be used as the separator for fuel cell (a), having a weight per unit area of 0.28 g/cm², a thickness of 5 mm and dimensions of 200 mm × 200 mm were obtained. Additionally, 11 sheets for molding, which are to be used for the separator for fuel cell (b), having a weight per unit area of 0.34 g/cm², a thickness of 6 mm and dimension of 200 mm × 200 mm were obtained.

### (5) Production of the Separators for Fuel Cell

Then, molds were used for the purpose of obtaining the separators for fuel cell shown in Figs. 1A, 1B, 2, 3A, 3B and 4. The lower mold plate (the part becoming Fig. 1B (back side) after molding) for obtaining the separator shown in Figs. 1A, 1B and 2 had a flat molding surface (200 mm long, 200 mm wide), while the upper mold plate (the part becoming Fig. 1A (front side) after molding) was a mold having protrusions. More specifically, the upper mold plate was made to have such a shape that, after molding, the rib height was 0.6 mm, the rib pitch was 2 mm, the rib width was 2 mm and the rib taper was 10 degrees. Additionally, the area in which the rib portion 1 was formed was the central 150 mm × 150 mm portion.

On the other hand, the lower mold plate (the part becoming Fig. 3B (back side) after molding) and the upper mold plate (the part becoming Fig. 3A (front side) after molding) for obtaining the separator shown in Figs. 3A, 3B and 4 had protrusions. The lower mold plate was made to have such a shape that after molding, the rib height was 0.5 mm, the rib pitch was 6 mm, the rib width was 6 mm and the rib taper was 10 degrees. Additionally, the upper mold plate was made to have the same shape as the upper mold plate for obtaining the separator of which the shape is shown in Figs. 1A, 1B and 2.

At the beginning, the upper and lower mold plates and the mold outer frame for the separator for fuel cell (a) were heated to 180°C, a piece of the sheet for molding having a weight per unit area of 0.28 g/cm² obtained in (4) was placed on the lower mold plate, and thereafter, on the top thereof, the upper mold plate was placed with the portion having the protrusions facing downward, and the molding was carried out for 10 minutes under the conditions of 180°C and a contact pressure of 19.6 MPa (2 × 10⁶ kg/m²), and then the molded body was taken out. Then, the post curing treatment was carried out at 200°C for 30 minutes, to obtain a 2.0 mm thick molded body. For each of the 10 sheets of the molded bodies obtained by 11 times repeating this molding, the openings 2 were punched at the predetermined positions on the flat portion 3 with a simple punching machine to obtain separators for fuel cell (a) having the shape shown in Figs. 1A, 1B and 2.

On the other hand, the upper and lower mold plates and the mold outer frame for the separator for fuel cell (b) were heated to 180°C, a piece of the sheet for molding having a weight per unit area of 0.34 g/cm² obtained in (4) was placed on the lower mold plate, and thereafter, a molded body was obtained through the same steps as those described above. The average thickness of the obtained molded body was 2.6 mm. For each of the 10 sheets of the molded bodies obtained by 11 times repeating this molding, the openings 2 were punched at the predetermined positions on the flat portion 3 with a simple punching machine to obtain separators for fuel cell (b) having the shape shown in Figs. 3A, 3B and 4.

### Example 6

The pulverized powder of expanded graphite sheet obtained in Example 5 was subjected to a heat treatment in the air at 400°C for 3 hours by use of an electric furnace. The same procedure as in Example 5 was repeated except for using the pulverized powder of expanded graphite sheet that has been subjected to additional heat treatment and has a number average particle size of 250 µm and a bulk density of 0.25 g/cm³, to obtain 10 sheets of each of the separator for fuel cell (a) and the separator for fuel cell (b), and 1 sheet of each of the molded bodies for which no openings were punched. Incidentally, the ash component was 0.6 wt% and the sulfur content was 0.08 wt% for the pulverized powder of expanded graphite sheet after the heat treatment.

### Example 7

The pulverized powder of expanded graphite sheet obtained in Example 5 was subjected to a heat treatment in a nitrogen atmosphere with chlorine gas at 2,800°C for 12 hours by use of an electric furnace. The same procedure as in Example 5 was repeated except for using the pulverized powder of expanded graphite sheet that has been subjected to additional heat treatment and has a number average particle size of 250 µm and a bulk density of 0.25 g/cm³, to obtain 10 sheets of each of the separator for fuel cell (a) and the separator for fuel cell (b), and 1 sheet of each of the molded bodies for which no openings were punched. Incidentally, the ash component was 0.002 wt% and the sulfur content was 0.01 wt% for the pulverized powder of expanded graphite sheet after the heat treatment.

### Comparative Example 3

The same procedure as in Example 5 was repeated except that the stirring time after addition of water in the process of preparing acid treated graphite in (3) of Example 5 was made to be 5 minutes, to obtain a pulverized powder of expanded graphite sheet of 0.6 wt% in ash content, 0.4 wt% in sulfur content, 250 µm in number average particle size and 0.25 g/cm³ in bulk density, and furthermore, to obtain 10 sheets of each of the separator for fuel cell (a) and the separator for fuel cell (b) and 1 sheet of each of the molded bodies for which no openings were punched.

### Comparative Example 4

The same procedure as in Example 5 was repeated except that a stainless steel vat was used for the vessel used in the process of expanding the acid treated graphite in (3) of Example 5, to obtain a pulverized powder of expanded graphite sheet of 0.9 wt% in ash content, 0.10 wt% in sulfur content, 250 µm in number average particle size and 0.25 g/cm³ in bulk density, and furthermore, to obtain 10 sheets of each of the separator for fuel cell (a) and the separator for fuel cell (b) and 1 sheet of each of the molded bodies for which no openings were punched.

### Comparative Example 5

The same procedure as in Example 5 was repeated except that the post curing treatment after molding in (5) of Example 5 was omitted, to obtain the same pulverized powder of expanded graphite sheet as that in Example 5, and furthermore, to obtain 10 sheets of each of the separator for fuel cell (a) and the separator for fuel cell (b) and 1 sheet of each of the molded bodies for which no openings were punched.

Then, from the flat portion of each of the molded bodies, for which no openings were punched, obtained in Examples 5 to 7 and Comparative Examples 3 to 5, a 25 mm wide and 50 mm long specimens were cut out. The obtained specimens were fully washed with pure water, and thereafter each placed in a glass bottle fully cleaned with pure water to be soaked in 30 times the volume of the molded body of water.

These bottles were held for 100 hours in a constant temperature and constant humidity chamber with a temperature maintained at 80±2°C and a humidity maintained at 95%. The metal impurities contained in the soaking water after cooling were subjected to the measurement based on the inductively coupled plasma emission spectrometry. Furthermore, the gas obtained by burning each sample was sampled in a collecting liquid and subjected to the analysis based on the ion chromatography to measure the sulfur content contained in the soaking water. Table 2 shows the results.

Incidentally, the contents of sodium, potassium, iron, nickel, magnesium and sulfur in the pure water used for soaking were all below the detection limits.

Additionally, by using the separators for fuel cell (a) and the separators for fuel cell (b) obtained in Examples 5 to 7 and Comparative Examples 3 and 5, fuel cells were assembled and the cell properties were checked. At the beginning, a carbon powder supporting a platinum catalyst and a perfluorosulfonic acid powder were dispersed in ethanol to prepare a paste, and the paste was uniformly applied onto a carbon paper to form an electrode catalyst layer. Two sheets of the paste coated carbon paper were cut into 150 mm squares. With the 2 sheets, a 50 µm thick perfluorosulfonic acid film (brand name Nafion manufactured by Du Pont Corp.) was sandwiched in such a way that the paste coated surfaces faced the inside. These sheets and film were compression bonded to each other while being heated, to prepare a membrane electrode assembly (MEA).

Then, 10 sheets were provided for each of the separators for fuel cell (a) of which the shapes are shown in Figs. 1A, 1B and 2 and the separators for fuel cell (b) of which the shapes are shown in Figs. 3A, 3B and 4, obtained in Examples 5 to 7 and Comparative Examples 3 to 5; the above described MEA was sandwiched between a surface (front surface) of the separator for fuel cell (a) shown in Fig. 1A and a surface (front surface) of the separator for fuel cell (b) shown in Fig. 3A; and the rib portions 1 and the peripheries of the openings 2 of both separators were sealed with a liquid packing (silicone rubber); to prepare 10 sets of single cells.

Then, the obtained 10 sets of single cells were laminated while sealing the rib portions 1 and the peripheries of the openings 2 of the surface (back side), the outer side, of the separator for fuel cell (a) shown in Fig. 1B and the adjacent surface (back side), the outer side, of the adjacent separator for fuel cell (b) shown in Fig. 3B with a liquid packing (silicone rubber). Then, the upper side and the bottom side of the laminate were sandwiched with rigid plates, and fixed by applying a contact pressure of 500 KPa, to obtain a stack for use in checking the cell properties.

The stack thus obtained for use in checking the cell properties was supplied with hydrogen gas, air and cooling water through the openings (manifold) 2, maintained at 80°C, and operated at a current density of 0.4 mA/cm², while measuring the output voltage of each of the single cells. The operation time was targeted at 100 hours. When no problem occurred, the average voltage of the 10 cell is shown in Table 2, while when problems occurred and the operation was discontinued, the average voltage of the 10 cells immediately before the termination is shown in Table 2.

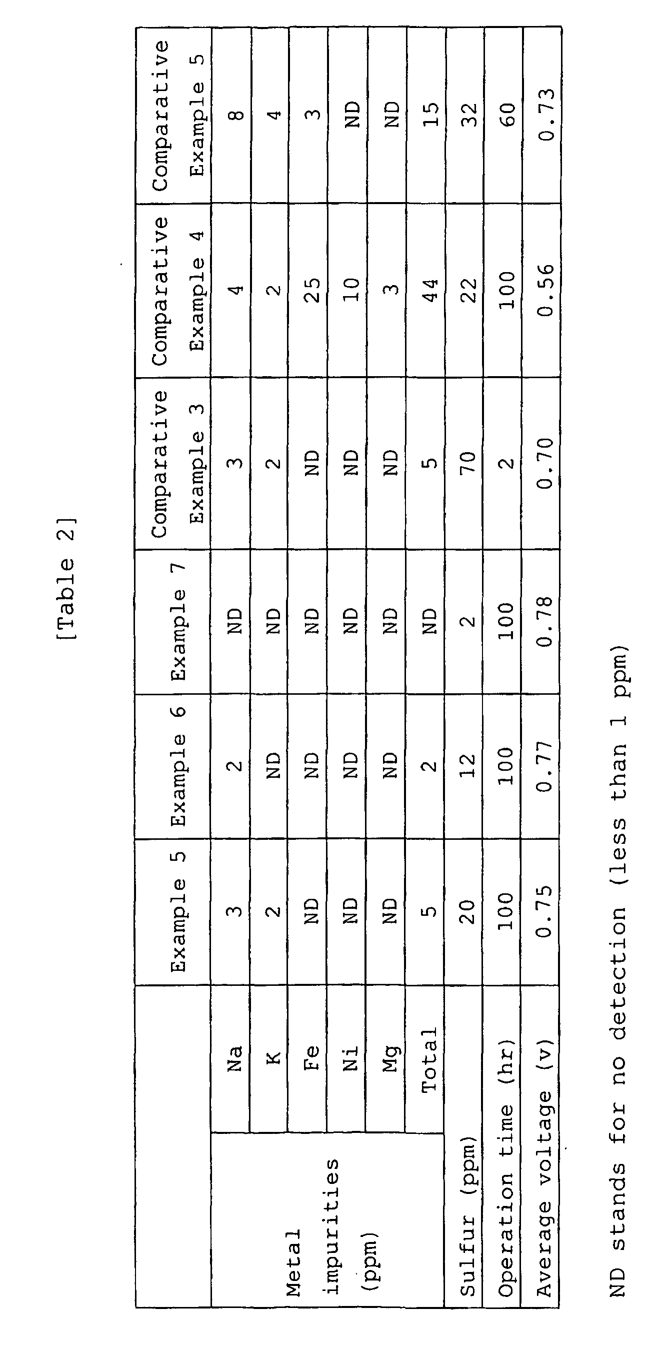

As is shown in Table 2, it is clear that the separators for fuel cell of Examples 5 to 7 of the present invention were small in the amounts of the metal impurities and sulfur released into the soaking water, and maintained high output even for the operation for 100 hours.

In contrast, the separator for fuel cell of Comparative Example 3 was large in the amount of sulfur released into the soaking water, caused short circuiting between the cells in 2 hours; the separator for fuel cell of Comparative Example 4 was large in the amounts of metal impurities and sulfur released into the soaking water, and gave rise to the low average voltage; additionally, the separator for fuel cell of Comparative Example 5 was large in the amounts of metal impurities and sulfur released into the soaking water, made the soaking water high in conductivity, caused a drawback that the short circuiting occurred in 60 hours.

### INDUSTRIAL APPLICABILITY

The separator for fuel cell of the present invention is a separator for fuel cell excellent in the assembly soundness of the fuel cell stack and/or hardly causing the deterioration of the cell properties even for long time operation, and inexpensive.

Additionally, the fuel cell of the present invention is a high performance fuel cell comprising a separator for fuel cell excellent in the assembly soundness of the fuel cell stack and/or hardly causing the deterioration of the cell properties even for long time operation, and inexpensive.

## Claims

1. A separator for fuel cell having a bending strain at break of 0.5% or more.

2. The separator for fuel cell according to claim 1, having a compressive modulus of 20 GPa or less.

3. The separator for fuel cell according to claim 1 or 2, having a Shore hardness ranging from 20 to 50.

4. A separator for fuel cell having a compressive modulus of 20 GPa or less.

5. The separator for fuel cell according to claim 4, having a Shore hardness ranging from 20 to 50.

6. A separator for fuel cell having a Shore hardness ranging from 20 to 50.

7. The separator for fuel cell according to any one of claims 1 to 6, wherein the separator is a molded body comprising graphite and a resin.

8. A separator for fuel cell made of a molded body comprising graphite and a resin, wherein, after soaking the separator at 80°C for 100 hours in 30 times the volume of the molded body of water, total concentration of sodium, potassium, iron, nickel and magnesium released into the soaking water is 20 ppm or less, and concentration of sulfur released into the soaking water is 30 ppm or less.

9. The separator for fuel cell according to any one of claims 1 to 8, wherein the separator has a rib portion and a flat portion.

10. The separator for fuel cell according to claim 7 or 8, wherein the graphite is expanded graphite.

11. The separator for fuel cell according to claim 10, wherein the expanded graphite is a pulverized powder of the expanded graphite sheet.

12. The separator for fuel cell according to claim 7 or 8, wherein the resin is a thermosetting resin.

13. The separator for fuel cell according to any one of claims 1 to 12, wherein the separator has opening portions other than the rib portion and the flat portion.

14. A fuel cell comprising a separator for fuel cell according to any one of claims 1 to 13.

15. The fuel cell according to claim 14, wherein the fuel cell is a polymer electrolyte fuel cell.
